# EUROPÄISCHE PATENTSCHRIFT

(11) **EP 2 478 688 B1**
(45) Veröffentlichungstag und Bekanntmachung des Hinweises auf die Patenterteilung: **15.04.2015**
(21) Anmeldenummer: 10754750.7
(22) Anmeldetag: 17.09.2010
(51) Int. Cl.: H04L 12/761, H04W 40/32

(54) **FUNKNETZWERK**
RADIO NETWORK
RÉSEAU RADIO

(30) Priorität: 18.09.2009 DE 102009041836
(43) Veröffentlichungstag der Anmeldung: 25.07.2012
(73) Patentinhaber: Phoenix Contact GmbH & Co. KG, 32825 Blomberg (DE)
(72) Erfinder: HAKEMEYER, Frank, 32805 Horn-Bad Meinberg (DE); KLEIN, Daniel, 32825 Blomberg (DE); SENGER, Andreas, 33184 Altenbeken (DE)
(74) Vertreter: Michalski Hüttermann & Partner Patentanwälte mbB
(86) Internationale Anmeldenummer: PCT/EP2010/063740
(87) Internationale Veröffentlichungsnummer: WO 2011/033088

(56) Entgegenhaltungen:
- US-A1- 2005 180 447

## Beschreibung

Die Erfindung betrifft ein Funknetzwerk das mehrere Teilnehmer umfasst, die miteinander mittels Funkwellen kommunizieren können.

Netzwerke, die mehrere Teilnehmer aufweisen, die miteinander kommunizieren können, sind allgemein bekannt. Die Teilnehmer können innerhalb des Netzwerkes in verschiedenen logischen Strukturen angeordnet sein, wobei es bekannt ist, die Teilnehmer in Form einer Baumstruktur anzuordnen. In einer Baumstruktur steht ein Teilnehmer an der Spitze, die übrigen Teilnehmer schließen sich an diesen Teilnehmer an. Der an der Spitze der Baumstruktur stehende Teilnehmer ist Teil einer obersten, ersten Netzwerkebene, die unmittelbar mit diesem Teilnehmer verbundenen Teilnehmer gehören zu einer der ersten Netzwerkebene untergeordneten zweiten Netzwerkebene, die sich an die letzteren Teilnehmer unmittelbar anschließenden Teilnehmer sind Teil ein dritten, der zweiten Netzwerkebene untergeordnete Netzwerkebene, usw. In einer Baumstruktur sind nur Verbindungen zwischen Teilnehmern benachbarter Netzwerkebenen erlaubt. Verbindungen innerhalb einer Netzwerkebene sind verboten. Des Weiteren ist ein Teilnehmer, abgesehen von dem Teilnehmer an der Spitze der Baumstruktur, genau mit einem Teilnehmer einer benachbarten übergeordneten Netzwerkebene verbunden. Des Weiteren können mehrere Teilnehmer einer untergeordneten Netzwerkebene mit einem einzelnen Teilnehmer der benachbarten übergeordneten Netzwerkebene verbunden sein.

Die Teilnehmer eines Netzwerkes werden auch als "Netzwerkknoten" oder "Knoten" bezeichnet. Des Weiteren unterscheidet man, je nach Funktion des Teilnehmers, zwischen Master-Teilnehmer, Repeaterslave-Teilnehmer und Slave-Teilnehmer. Der Master-Teilnehmer bildet den zentralen Punkt des Netzwerkes. Initialisierung und netzwerkspezifische Funktionen werden durch den Master-Teilnehmer durchgeführt. Ohne einen Master-Teilnehmer ist das Netzwerk nicht funktionsfähig. In einer Baumstruktur ist der Teilnehmer an der Spitze ein Master-Teilnehmer. Ein Repeaterslave-Teilnehmer hat die Funktion, Nachrichten zwischen benachbarten Teilnehmern weiterzuleiten. Ein Slave-Teilnehmer leitet keine Nachrichten weiter. Slave-Teilnehmer bilden immer Endpunkte des Netzwerkes.

Es sind Funknetzwerke bekannt, die eine überlagerte Steuerung aufweisen, die Daten von einzelnen Teilnehmern des Funknetzwerkes einsammelt und Daten an Teilnehmer des Funknetzwerkes verteilt. Eine derartige überlagerte Steuerung kann beispielsweise eine SPS(Storage Programmable Control)-Steuerung sein, die an einen Master-Teilnehmer des Funknetzwerkes, beispielsweise über eine Datenschnittstelle, angeschlossen ist. Insbesondere der Austausch von Daten, die die einen Teilnehmer des Funknetzwerkes zur Verfügung stellen, und die andere Teilnehmer des Funknetzwerkes benötigen, erfolgt über diese überlagerte Steuerung.

Ein derartiger Aufbau eines Funknetzwerkes erfordert von dem Anwender, ein spezielles Programm in der Steuerung zu erstellen, welches das Einsammeln und das Verteilen von Daten durchführt. Da es sehr unterschiedliche Steuerungen mit unterschiedlichen Programmierumgebungen gibt, beispielsweise KOP, FPS, FUP, AWL, oder aber auch auf Hochsprachen basierte Steuerungen wie beispielsweise C oder C++, ist es oftmals für den Anwender schwierig und aufwendig, einen Datenaustausch zwischen den Teilnehmern des Funknetzwerkes zu realisieren.

Aus der US 2005/0180447 A1 ist ein Funknetzwerk mit mehreren ersten Teilnehmern, die mittels Funkwellen miteinander kommunizieren können, bekannt. Aus einer PAN ID wird eine eine "multicast group address" erzeugt. Ausgehend von der "multicast group address" erfolgt eine Datenübertragung zwischen Teilnehmern mit derselben "multicast group address".

Der Erfindung liegt die Aufgabe zugrunde, ein Funknetzwerk zu schaffen, das es einem Anwender ermöglicht, auf einfache Art und Weise den Austausch von Daten zwischen Teilnehmern des Funknetzwerkes zu programmieren.

Diese Aufgabe wird durch ein Funknetzwerk gemäß dem unabhängigen Anspruch 1 gelöst. Vorteilhafte Ausgestaltungen der Erfindung sind in den Unteransprüchen angegeben.

Das erfindungsgemäße Funknetzwerk umfasst mehrere erste Teilnehmer, die miteinander mittels Funkwellen kommunizieren können, wobei die ersten Teilnehmer mindestens eine Eingabeeinheit zur Eingabe von Daten und mindestens eine Ausgabeeinheit zur Ausgabe von Daten aufweisen, wobei an der Eingabeeinheit eine erste Referenz einstellbar ist, und an der Ausgabeeinheit eine zweite Referenz einstellbar ist, wobei das Funknetzwerk derart eingerichtet ist, dass an der Eingabeeinheit eingehende Daten an die ein oder mehreren Ausgabeeinheiten kommuniziert werden, deren zweite Referenz mit der an der Eingabeeinheit eingestellten ersten Referenz übereinstimmt.

Eine übergeordnete Steuerung, mittels der der Austausch von Daten zwischen den Eingabeeinheiten und den Ausgabeeinheiten der ersten Teilnehmer gesteuert wird, kann auf diese Weise entfallen. Es kann allein durch das Einstellen der ersten Referenz an einer Eingabeeinheit und durch Einstellen der zweiten Referenz an einer Ausgabeeinheit festgelegt werden, an welche Ausgabeeinheit oder Ausgabeeinheiten an einer Eingabeeinheit eingehende Daten kommuniziert werden. Die "Programmierung" eines solchen Datenaustausches ist für einen Anwender einfach durchführbar. Insbesondere muss der Anwender keine Programmiersprachen beherrschen. Des weiteren kann dadurch, dass eine überlagerte Steuerung nicht benötigt wird, das Funknetzwerk mit einer reduzierten Anzahl von Komponenten aufgebaut werden.

Eine Eingabeeinheit ist eine Einheit, über die Daten in das Funknetzwerk eingegeben werden können, beispielsweise Messsignale von mit der Eingabeeinheit verbundenen Sensoren, Schaltsignale von mit der Eingabeeinheit verbundenen Schaltern oder sonstiger Eingabedaten. Eine Ausgabeeinheit ist eine Einheit, mit der Daten aus dem Funknetzwerk ausgegeben werden können, beispielsweise an eine Ausgabeeinheit angeschlossene Aktoren oder Anzeigen oder sonstigen Einrichtungen, die solche Ausgabedaten verwenden.

Die erste Referenz und die zweite Referenz können insbesondere als Referenznummern ausgeführt sein. Alternativ kann die erste Referenz und/oder die zweite Referenz beispielsweise auch durch Buchstaben oder Buchstabenfolgen, oder durch Symbole gebildet werden. Bevorzugt ist, dass die erste Referenz und die zweite Referenz manuell einstellbar sind.

Aus der Tatsache, dass "erste" Teilnehmer vorgesehen sind, folgt nicht zwingend, dass "zweite" Teilnehmer vom Funknetzwerk umfasst sein müssen. Das Funknetzwerk kann allein erste Teilnehmer aufweisen.

In einer vorteilhaften Ausgestaltung umfasst das Funknetzwerk einen zweiten Teilnehmer, wobei das Funknetzwerk derart eingerichtet ist, dass von einer Eingabeeinheit eines ersten Teilnehmers aufgenommene Daten an den zweiten Teilnehmer kommuniziert werden, und Daten von einer Eingabeeinheit, die durch eine übereinstimmende erste Referenz und zweite Referenz einer oder mehreren Ausgabeeinheiten zugeordnet sind, von dem ersten Teilnehmer an die zugeordnete eine oder an die zugeordneten mehreren Ausgabeeinheiten kommuniziert werden.

Der Datenaustausch zwischen Eingabeeinheiten und Ausgabeeinheiten erfolgt auf diese Weise mittelbar über den zweiten Teilnehmer. Dies ermöglicht es, den Datenaustausch zwischen den Eingabeeinheiten und den Ausgabeeinheiten mittels des zweiten Teilnehmers zu steuern. Bevorzugt ist das Funknetzwerk derart eingerichtet, dass der zweite Teilnehmer die von den Eingabeeinheiten aufgenommenen Daten sammelt, und Daten von den Eingabeeinheiten von dem zweiten Teilnehmer erst dann an die ersten Teilnehmern mit der den Daten zugeordneten Ausgabeeinheit oder Ausgabeeinheiten kommuniziert werden, wenn die Daten von den ersten Teilnehmern benötigt und/oder angefordert werden. Letzteres verhindert einen unnötigen Datenaustausch und reduziert den Netzwerkverkehr.

Der zweite Teilnehmer kann auch selbst eine oder mehrere Eingabe- und/oder Ausgabeeinheiten umfassen.

Der zweite Teilnehmer ist vorzugsweise ein Master-Teilnehmer.

In einer vorteilhaften Ausgestaltung ist das Funknetzwerk als Baumstruktur strukturiert. Ist ein zweiter Teilnehmer vorgesehen, der insbesondere als Master-Teilnehmer ausgeführt ist, ist bevorzugt, dass der zweite Teilnehmer die Spitze der Baumstruktur bildet.

Nachfolgend wird die Erfindung unter Bezugnahme auf die anliegenden Zeichnungen anhand bevorzugter Ausführungsformen näher erläutert.

Es zeigt:
- Fig. 1: eine schematische Darstellung einer Ausführungsform eines erfindungsgemäßen Funknetzwerkes,
- Fig. 2: das in Fig. 1 gezeigte Funknetzwerk mit einer beispielhaften Zuordnung von verschiedenen Eingabeeinheiten zu verschiedenen Ausgabeeinheiten der Teilnehmer des Funknetzwerkes,
- Fig. 3: eine erste Ausführungsform eines ersten Teilnehmers des Funknetzwerkes, und
- Fig. 4: eine zweite Ausführungsform eines ersten Teilnehmers des Funknetzwerkes.

Gleiche oder einander entsprechende Bauteile sind in den Figuren mit denselben Bezugszeichen versehen.

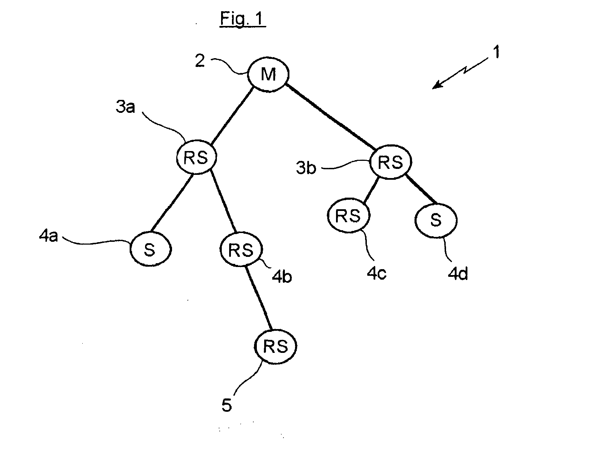

Die Fig. 1 zeigt in einer schematischen Darstellung eine Ausführungsform eines erfindungsgemäßen Funknetzwerkes 1.

Das Funknetzwerk 1 umfasst mehrere erste Teilnehmer 3a, 3b, 4a bis 4d, 5 und einen zweiten Teilnehmer 2, die miteinander mittels Funkwellen kommunizieren können. Das Funknetzwerk 1 ist in Form einer Baumstruktur strukturiert, wobei der zweite Teilnehmer 2 an der Spitze der Baumstruktur steht, und die ersten Teilnehmer 3a, 3b, 4a bis 4d, 5 sich an den zweiten Teilnehmer 2 anschließen. Der zweite Teilnehmer 2 ist in diesem Ausführungsbeispiel ein Master-Teilnehmer, der sich in einer ersten Netzwerkebene des Funknetzwerkes 1 befindet, die ersten Teilnehmer 3a, 3b sind Repeaterslave-Teilnehmer, die sich in einer der ersten untergeordneten zweiten Netzwerkebene befinden, die ersten Teilnehmer 4a, 4d sind Slave-Teilnehmer, die sich in einer der zweiten untergeordneten dritten Netzwerkebene befinden, die ersten Teilnehmer 4b, 4c sind Repeaterslave-Teilnehmer, die sich ebenfalls in der dritten Netzwerkebene befinden, der erste Teilnehmer 5 schließlich ist ein Repeaterslave-Teilnehmer, der sich in einer der dritten untergeordneten vierten Netzwerkebene befindet. Innerhalb des Funknetzwerkes 1 ist eine Kommunikation zwischen dem zweiten Teilnehmer 2 und dem ersten Teilnehmer 3a, dem zweiten Teilnehmer 2 und dem ersten Teilnehmer 3b, dem ersten Teilnehmer 3a und dem ersten Teilnehmer 4a, dem ersten Teilnehmer 3a und dem ersten Teilnehmer 4b, dem ersten Teilnehmer 3b und dem ersten Teilnehmer 4c, dem ersten Teilnehmer 3b und dem ersten Teilnehmer 4d, sowie zwischen dem ersten Teilnehmer 4b und dem ersten Teilnehmer 5 möglich. Die ersten Teilnehmer 4a, 5, 4c, 4d bilden Endpunkte des Funknetzwerkes 1.

Der Aufbau des Netzwerkes 1 ist lediglich beispielhaft. Beispielsweise können weitere Netzwerkebenen und/oder weitere Teilnehmer vorgesehen sein.

Das Funknetzwerk 1 ist derart eingerichtet, dass es gemäß einem Polling-Verfahren arbeitet. Der zweite Teilnehmer 2 kontaktiert nacheinander die ersten Teilnehmer 3a, 3b, 4a bis 4d, 5, in diesem Ausführungsbeispiel zyklisch, um Daten zwischen dem zweiten Teilnehmer 2 und dem kontaktierten ersten Teilnehmer zu kommunizieren. Ein derartiges Kontaktieren wird auch als "Polling" bezeichnet. Polling-Verfahren sind dem Fachmann bekannt.

Die ersten Teilnehmer 3a, 3b, 4a bis 4d, 5 und der zweite Teilnehmer 2 können mindestens eine Eingabeeinheit zur Eingabe von Daten und/oder mindestens eine Ausgabeeinheit zur Ausgabe von Daten aufweisen, wobei an einer Eingabeeinheit eine erste Referenz einstellbar ist, und an einer Ausgabeeinheit eine zweite Referenz einstellbar ist, wobei das Funknetzwerk 1 derart eingerichtet ist, dass an der Eingabeeinheit eingehende Daten an die ein oder mehreren Ausgabeeinheiten kommuniziert werden, deren zweite Referenz mit der an der Eingabeeinheit eingestellten ersten Referenz übereinstimmt.

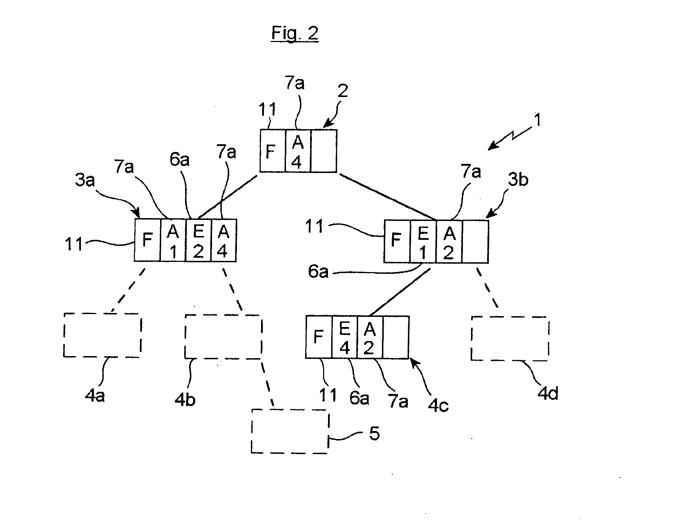

Dies soll beispielhaft anhand der Fig. 2 dargestellt werden.

Der zweite Teilnehmer 2 umfasst eine Funkeinheit 11 zum Senden und zum Empfangen von Funkwellen, und eine Ausgabeeinheit 7a.

Der Teilnehmer 3a umfasst eine Funkeinheit 11, zwei Ausgabeeinheiten 7a und eine Eingabeeinheit 6a. Der erste Teilnehmer 3b umfasst eine Funkeinheit 11, eine Eingabeeinheit 6a und eine Ausgabeeinheit 7a. Der erste Teilnehmer 4c umfasst eine Funkeinheit 11, eine Eingabeeinheit 6a und eine Ausgabeeinheit 7a. Der zweite Teilnehmer 2 und die ersten Teilnehmer 3a, 3b, 4c sind modular aufgebaut, Funkeinheit 11, Eingabeeinheiten 6a und Ausgabeeinheiten 7a sind als Module ausgeführt. Die modulare Ausführung der Teilnehmer ermöglicht es, ohne großen Aufwand bei jedem Teilnehmer die benötigten Einheiten, insbesondere die benötige Anzahl an Eingabeeinheiten und/oder Ausgabeeinheiten vorzusehen. Des Weiteren ist eine nachträgliche Ergänzung oder ein Austausch von Einheiten einfach möglich.

Die weiteren ersten Teilnehmer 4a, 4b, 4d und 5 können, ähnlich den ersten Teilnehmern 3a, 3b, 4c, eine Funkeinheit 11 und eine oder mehrere Eingabeeinheiten 6a und/oder Ausgabeeinheiten 7a aufweisen.

An der Ausgabeeinheit 7a des zweiten Teilnehmers 2 ist die zweite Referenz auf "4" eingestellt. An der Eingabeeinheit 6a des ersten Teilnehmers 3 ist die erste Referenz "2", an den beiden Ausgangseinheiten 7a die zweite Referenz "1" und "4" eingestellt. An der Eingabeeinheit 6a des ersten Teilnehmers 3 ist die erste Referenz "1", an der Ausgabeeinheit 7a die zweite Referenz "2" eingestellt. An der Eingabeeinheit 6a des ersten Teilnehmers 4c ist die erste Referenz "4", an der Ausgabeeinheit 7a die zweite Referenz "2" eingestellt.

An der Eingabeeinheit 6a des ersten Teilnehmers 3b eingegebene Daten werden damit an die Ausgabeeinheit mit der zweiten Referenz "1" des ersten Teilnehmers 3a kommuniziert. An der Eingabeeinheit 6a des ersten Teilnehmers 3a eingegebene Daten werden an die Ausgabeeinheiten 7a der ersten Teilnehmer 3b, 4c kommuniziert. An der Eingabeeinheit 6a des ersten Teilnehmers 4c eingegebene Daten werden an die Ausgabeeinheiten 7a mit der zweiten Referenz "4" des ersten Teilnehmers 3a und des zweiten Teilnehmers 2 kommuniziert.

Das Funknetzwerk 1 ist derart eingerichtet, dass von einer Eingabeeinheit 6a eines ersten Teilnehmers 3a, 4b, 4c aufgenommene Daten zunächst an den zweiten Teilnehmer 2 kommuniziert werden. Anschließend werden die Daten von einer Eingabeeinheit 6a, die durch eine übereinstimmende erste Referenz und zweite Referenz einer oder mehreren Ausgabeeinheiten 7a zugeordnet sind, von dem zweiten Teilnehmer 2 an den oder die ersten Teilnehmer 3a, 4b, 4c mit der den Daten zugeordneten einen oder mehreren Ausgabeeinheiten 7a kommuniziert. Der zweite Teilnehmer 2 weist einen Datenspeicher auf, in dem er die kommunizierten Daten abspeichert und aus dem er die Daten zur Kommunikation an ein oder mehrere Ausgabeeinheiten 7a abruft. Vorzugsweise kommuniziert der zweite Teilnehmer 2 die Daten der Eingabeeinheiten 6a an die ersten Teilnehmer 3a, 4b, 4c der zugeordneten Ausgabeeinheiten 7a nur, wenn der oder die ersten Teilnehmer 3a, 4b, 4c die Daten anfordern, beispielsweise weil an den Ausgabeeinheiten 7a Bedarf an Daten besteht.

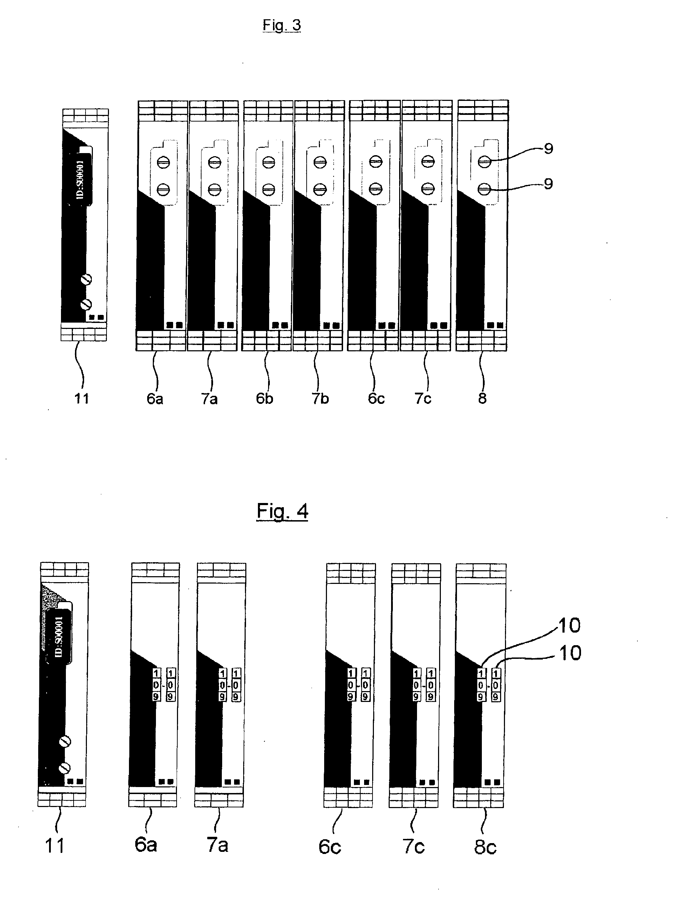

Die Fig. 3 zeigt eine erste Ausführungsform eines ersten Teilnehmers, der in einem Funknetzwerk 1 einsetzbar ist.

Der erste Teilnehmer ist modular aufgebaut und umfasst ein Kopfmodul 11 mit integrierter Funkeinheit, eine erste Eingabeeinheit 6a, eine erste Ausgabeeinheit 7a, eine zweite Eingabeeinheit 6b, eine zweite Ausgabeeinheit 7b, eine dritte Eingabeeinheit 6c, eine zweite Ausgabeeinheit 7c, und eine kombinierte Eingabe-Ausgabeeinheit 8, wobei die Einheiten jeweils als scheibenförmige Module ausgeführt sind. Die erste Eingabeeinheit 6a hat vier digitale Eingänge, die erste Ausgabeeinheit 7a hat vier digitale Ausgänge, die zweite Eingabeeinheit 6b hat acht digitale Eingänge, die zweite Ausgabeeinheit 7b hat acht digitale Ausgänge, die dritte Eingabeeinheit 6c hat vier analoge Eingänge, die dritte Ausgabeeinheit 7 hat vier analoge Ausgänge, die kombinierte Eingabe-Ausgabeeinheit 8 hat jeweils zwei digitale Ein- und zwei digitale Ausgänge und zwei analoge Ein- und zwei analoge Ausgänge.

Um eine erste Referenz und/oder eine zweite Referenz einzustellen, weist jede Eingabeeinheit 6a, 6b, 6c, 8 und jede Ausgabeeinheit 7a, 7b, 7c, 8 manuell einstellbare Adresskodierschalter, hier Drehkordierschalter 9 auf. Jeweils ein Drehkodierschalter 9 kann auf eine natürliche Zahl im Bereich von 0 bis 9 eingestellt werden. Auf diese Weise lassen sich insgesamt 100 sich unterscheidende erste Referenzen und zweite Referenzen einstellen.

Die Fig. 4 zeigt eine zweite Ausführungsform eines ersten Teilnehmers. Im Gegensatz zur in Fig. 3 gezeigten ersten Ausführungsform eines ersten Teilnehmers ist die erste Referenz an einer Eingabeeinheit 6a, 6c, 8 und die zweite Referenz an einer Ausgabeeinheit 7a, 7c, 8 mittels zweier Rändelräder 10 manuell einstellbar. Jedes Rändelrad ist auf eine natürliche Zahl im Bereich von 0 bis 9 einstellbar. Dementsprechend ergibt sich die Möglichkeit, 100 unterschiedliche erste Referenzen und zweite Referenzen einzustellen.

Je nach Anzahl der Ein- und Ausgabeeinheiten innerhalb des Funknetzwerkes können ein oder mehrere Drehkodierschalter 9 und/oder Rändelräder 10 vorgesehen sein.

**Bezugszeichenliste**

| | |
|---|---|
| Funknetzwerk | 1 |
| Zweiter Teilnehmer | 2 |
| Erster Teilnehmer | 3a, 3b, 4a, 4b, 4c, 4d, 5 |
| Eingabeeinheit | 6a, 6b, 6c |
| Ausgabeeinheit | 7a, 7b, 7c |
| Kombinierte Eingabe-Ausgabeeinheit | 8 |
| Drehkodierschalter | 9 |
| Rändelrad | 10 |
| Funkeinheit | 11 |

## Patentansprüche

1. Funknetzwerk (1), umfassend mehrere erste Teilnehmer (3a, 4b, 4c), die miteinander mittels Funkwellen kommunizieren können, wobei die ersten Teilnehmer (3a, 4b, 4c) mindestens eine Eingabeeinheit (6a) zur Eingabe von Daten und mindestens eine Ausgabeeinheit (7a) zur Ausgabe von Daten aufweisen, **dadurch gekennzeichnet, dass** an jeder Eingabeeinheit (6a) eine erste Referenz einstellbar ist, und an jeder Ausgabeeinheit (7a) eine zweite Referenz einstellbar ist, wobei das Funknetzwerk (1) derart eingerichtet ist, dass an einer Eingabeeinheit (6a) eingehende Daten an die ein oder mehreren Ausgabeeinheiten (7a) kommuniziert werden, deren zweite Referenz mit der an der Eingabeeinheit (6a) eingestellten ersten Referenz übereinstimmt.

2. Funknetzwerk (1) nach Anspruch 1, zusätzlich umfassend einen zweiten Teilnehmer (2), wobei das Funknetzwerk (1) derart eingerichtet ist, dass von einer Eingabeeinheit (6a) eines ersten Teilnehmers (3a, 4b, 4c) aufgenommene Daten an den zweiten Teilnehmer (2) kommuniziert werden, und Daten von einer Eingabeeinheit (6a), die durch eine übereinstimmende erste Referenz und zweite Referenz einer oder mehreren Ausgabeeinheiten (7a) zugeordnet sind, von dem zweiten Teilnehmer (2) an die zugeordnete eine oder an die zugeordneten mehreren Ausgabeeinheiten (7a) kommuniziert werden.

3. Funknetzwerk (1) nach Anspruch 2, wobei der zweite Teilnehmer (2) einen Datenspeicher aufweist, in dem er die kommunizierten Daten abspeichert und aus dem er die Daten zur Kommunikation an ein oder mehrere Ausgabeeinheiten (7a) abruft.

4. Funknetzwerk (1) nach Anspruch 2 oder 3, derart eingerichtet, dass der zweite Teilnehmer (2) die ersten Teilnehmer (3a, 4b, 4c) nacheinander, vorzugsweise zyklisch, kontaktiert, um Daten zwischen dem zweiten Teilnehmer (2) und dem kontaktierten ersten Teilnehmer (3a, 4b, 4c) zu kommunizieren.

5. Funknetzwerk (1) nach einem der Ansprüche 2 bis 4, wobei die ersten Teilnehmer (3a, 4b, 4c) Repeaterslave-Teilnehmer und/oder Slave-Teilnehmer sind, und der zweite Teilnehmer (2) ein Master-Teilnehmer ist.

6. Funknetzwerk (1) nach einem der vorhergehenden Ansprüche, derart eingerichtet, dass das Funknetzwerk (1) gemäß einem Polling-Verfahren arbeitet.

7. Funknetzwerk (1) nach einem der vorhergehenden Ansprüche, wobei das Funknetzwerk (1) als Baumstruktur strukturiert ist.

8. Funknetzwerk (1) nach einem der vorhergehenden Ansprüche, wobei die erste Referenz an der Eingabeeinheit (6a) und/oder die zweite Referenz an der Ausgabeeinheit (7a) manuell einstellbar sind, vorzugsweise mittels eines oder mehreren Adresskodierschaltern, vorzugsweise Drehkodierschaltern (9) oder Rändelrädern (10).

9. Funknetzwerk (1) nach einem der vorhergehenden Ansprüche, wobei die ersten Teilnehmer (3a, 4b, 4c) und gegebenenfalls der zweite Teilnehmer (2) eine Funkeinheit (11) umfassen.

10. Funknetzwerk (1) nach einem der vorhergehenden Ansprüche, wobei die ersten Teilnehmer (3a, 4b, 4c) und gegebenenfalls der zweite Teilnehmer (2) modular aufgebaut sind, wobei die Eingabeeinheit (6a) ein Eingabemodul, die Ausgabeeinheit (7a) ein Ausgabemodul und gegebenenfalls die Funkeinheit (11) ein Funkmodul ist.

## Claims

1. A radio network (1), comprising a plurality of first users (3a, 4b, 4c) able to communicate with each other by way of radio waves, the first users (3a, 4b, 4c) comprising at least one input unit (6a) for inputting data and at least one output unit (7a) for outputting data, **characterized in that** a first reference can be set on each input unit (6a), and a second reference can be set on each output unit (7a), wherein the radio network (1) is configured in such a way that incoming data at an input unit (6a) are communicated to the one or more output units (7a) having a second reference that agrees with the first reference set on the input unit (6a).

2. The radio network (1) according to claim 1, additionally comprising a second user (2), wherein the radio network (1) is configured in such a way data recorded by an input unit (6a) of a first user (3a, 4b, 4c) are communicated to the second user (2), and data of an input unit (6a) which are assigned to one or more output units (7a) as a result of an agreeing first reference and second reference are communicated from the second user (2) to the assigned one output unit, or to the assigned multiple output units (7a).

3. The radio network (1) according to claim 2, wherein the second user (2) comprises a data memory, in which it stores the communicated data and from which it retrieves the data for communication to one or more output units (7a).

4. The radio network (1) according to claim 2 or 3, configured in such a way that the second user (2) consecutively, preferably cyclically, contacts the first users (3a, 4b, 4c) so as to communicate data between the second user (2) and the contacted first user (3a, 4b, 4c).

5. A radio network (1) according to any one of claims 2 to 4, wherein the first users (3a, 4b, 4c) are repeater slave users and/or slave users, and the second user (2) is a master user.

6. A radio network (1) according to any one of the preceding claims, configured in such a way that the radio network (1) operates according to a polling method.

7. A radio network (1) according to any one of the preceding claims, wherein the radio network (1) is structured as a tree structure.

8. A radio network (1) according to any one of the preceding claims, wherein the first reference on the input unit (6a) and/or the second reference on the output unit (7a) can be set manually, preferably by way of one or more address coding switches, preferably rotary coding switches (9) or thumb wheels (10).

9. A radio network (1) according to any one of the preceding claims, wherein the first users (3a, 4b, 4c) and optionally the second user (2) comprise a radio unit (11).

10. A radio network (1) according to any one of the preceding claims, wherein the first users (3a, 4b, 4c) and optionally the second user (2) have a modular design, the input unit (6a) being an input module, the output unit (7a) being an output module, and optionally the radio unit (11) being a radio module.

## Revendications

1. Réseau radio (1), comprenant plusieurs premiers abonnés (3a, 4b, 4c) aptes à communiquer entre eux aux moyen d'ondes radio, dans lequel les premiers abonnés (3a, 4b, 4c) comportent au moins une unité d'entrée (6a) pour l'entrée de données et au moins une unité de sortie (7a) pour la sortie de données, **caractérisé en ce qu'**une première référence peut être réglée sur chaque unité d'entrée (6a), et une deuxième référence peut être réglée sur chaque unité de sortie (7a), le réseau radio (1) étant conçu de telle façon que les données entrant dans une unité d'entrée (6a) sont communiquées à l'une ou plusieurs unités de sortie (7a) dont la deuxième référence coïncide avec la première référence réglée sur l'unité d'entrée (6a).

2. Réseau radio (1) selon la revendication 1, comprenant en outre un deuxième abonné (2), le réseau radio (1) étant conçu de telle façon que les données enregistrées par une unité d'entrée (6a) d'un premier abonné (3a, 4b, 4c) sont communiquées au deuxième abonné (2), et les données d'une unité d'entrée (6a) attribuée à une ou plusieurs unités de sortie (7a) de par la concordance des première et deuxième références sont communiquées par le deuxième abonné (2) à l'une ou aux plusieurs unité de sortie (7a) attribuée(s).

3. Réseau radio (1) selon la revendication 2, dans lequel le deuxième abonné (2) comporte une mémoire de données dans laquelle il stocke les données communiquées, et à partir de laquelle il extrait les données pour les communiquer à une ou plusieurs unités de sortie (7a).

4. Réseau radio (1) selon la revendication 2 ou 3, conçu de manière à ce que le deuxième abonné (2) contacte les premiers abonnés (3a, 4b, 4c) les uns après les autres, de préférence par cycles, pour communiquer des données entre le deuxième abonné (2) et le premier abonné (3a, 4b, 4c) contacté.

5. Réseau radio (1) selon l'une des revendications 2 à 4, dans lequel les premiers abonnés (3a, 4b, 4c) sont des abonnés répéteurs/esclaves et/ou des abonnés esclaves, et le deuxième abonné (2) est un abonné maître.

6. Réseau radio (1) selon l'une des revendications précédentes, conçu de telle façon que le réseau radio (1) travaille selon un procédé d'interrogation.

7. Réseau radio (1) selon l'une des revendications précédentes, dans lequel le réseau radio (1) est structuré comme une structure arborescente.

8. Réseau radio (1) selon l'une des revendications précédentes, dans lequel la première référence sur l'unité d'entrée (6a) et/ou la deuxième référence sur l'unité de sortie (7a) peuvent être réglées manuellement, de préférence au moyen d'un ou de plusieurs commutateurs de codage d'adresse, de préférence de commutateurs de codage rotatifs (9) ou de molettes (10).

9. Réseau radio (1) selon l'une des revendications précédentes, dans lequel les premiers abonnés (3a, 4b, 4c) et le cas échéant le deuxième abonné (2) comprennent une unité radio (11).

10. Réseau radio (1) selon l'une des revendications précédentes, dans lequel les premiers abonnés (3a, 4b, 4c) et le cas échéant le deuxième abonné (2) sont construits de façon modulaire, dans lequel l'unité d'entrée (6a) est un module d'entrée, l'unité de sortie (7a) est un module de sortie et le cas échéant, l'unité radio (11) est un module radio.
